# EUROPÄISCHE PATENTSCHRIFT

(11) **EP 1 857 222 B1**
(45) Veröffentlichungstag und Bekanntmachung des Hinweises auf die Patenterteilung: **01.07.2009**
(21) Anmeldenummer: 06010031.0
(22) Anmeldetag: 16.05.2006
(51) Int. Cl.: B23Q 11/12, F16N 11/08

(54) **Vorrichtung zum Schmieren von aneinander gleitenden Teilen**
Device for lubricating relatively sliding parts
Dispositif de lubrification de parties glissant relativement

(43) Veröffentlichungstag der Anmeldung: 21.11.2007
(73) Patentinhaber: Mikron Agie Charmilles AG, 2560 Nidau (CH)
(72) Erfinder: Löttgen, Ralf, 2503 Biel (CH); Hauser, Michael, 2502 Biel (CH); Thing, Jens, 2563 Ipsach (CH)
(74) Vertreter: Weiss, Wolfgang

(56) Entgegenhaltungen:
- EP-A- 1 112 820
- FR-A- 921 345
- US-A- 1 771 301
- US-A- 2 022 726
- US-A- 2 343 302
- US-A- 3 463 268
- US-A- 3 678 631
- US-A- 4 445 168

## Beschreibung

Die Erfindung betrifft eine Vorrichtung zum Schmieren von aneinander gleitenden und rollenden Teilen einer Werkzeugvorrichtung gemäss Oberbegriff von Anspruch 1 (siehe, z.B., EP-A- 1 112 820).

Weiterhin betrifft die Erfindung ein Verfahren unter Verwendung einer solchen Vorrichtung.

Bisher sind manuelle Schmiersysteme für Werkzeugvorrichtungen bekannt. Der Benutzer muss nach Erreichen einer bestimmten Arbeitszeit der Maschine, diese an bestimmten Stellen schmieren. Oder es sind separate Schmiersysteme mit eigenem Antrieb im Einsatz. Die Erfindung ist anwendbar für alle Maschinen und Maschinenteile, in denen gleitende oder rollende Teile geschmiert werden müssen. Dies gilt auch für Maschinen mit Linearmotor.

Solche Schmiervorrichtungen sind beispielsweise in der Patentliteratur EP 1 112 820 A, FR 921 345 A, US 2 343 302 A, US 1 771 301 A, US 2 022 726 A, US 3 678 631 A, US 3 463 268 A und US 4 445 168 A beschrieben.

Die Aufgabe der vorliegenden Erfindung ist es, ein Schmiersystem für eine Werkzeugvorrichtung vorzuschlagen, welches automatisch nach gewissen Arbeitszeitabschnitten der Maschine die Schmierstellen mit einem Schmiermittel in erforderlicher Menge versorgt.

Die Aufgabe wird erfindungsgemäss durch die Vorrichtung nach Anspruch 1 gelöst.

Weitere Ausgestaltung der erfindungsgemässen Vorrichtung zum Schmieren von aneinander gleitenden Teilen ergeben sich aus den Unteransprüchen sowie aus der Beschreibung der Figuren.

Die Erfindung ist in allen Werkzeugmaschinen mit beweglichen, zu schmierenden Teilen anwendbar, insbesondere für die x-, y- und z-Achsen Führungen in Fräsmaschinen, Elektroerosionsmaschinen etc. Dabei kann eine Zentralschmierung gleichzeitig für alle Achsen erfolgen, ausgelöst von beispielsweise der x - Achsenführung. Es kann aber auch jeweils ein Schmiersystem separat für jede Achse vorgesehen sein.

Die mit der Erfindung erzielten Vorteile liegen insbesondere darin, dass auf einen zusätzlichen Antrieb zum Schmieren verzichtet werden kann. Weiterhin bietet die Erfindung eine höhere Betriebssicherheit gegenüber einer manuellen Schmierung.

Die Erfindung wird im Folgenden anhand eines Ausführungsbeispiels beschrieben.
Es zeigen:
- Fig. 1: eine Spindel-Schlittenanordnung mit einer Schmiervorrichtung
- Fig. 2: eine Schnittzeichnung einer Schmiervorrichtung
- Fig. 3: eine Schnittzeichnung einer Spindel-Schlittenanordnung mit Schmiervorrichtung
- Fig.4: eine weitere Schnittzeichnung einer Spindel-Schlittenanordnung mit Schmiervorrichtung
- Fig. 5: ein Blockdiagramm zum Ablauf des Schmiervorganges

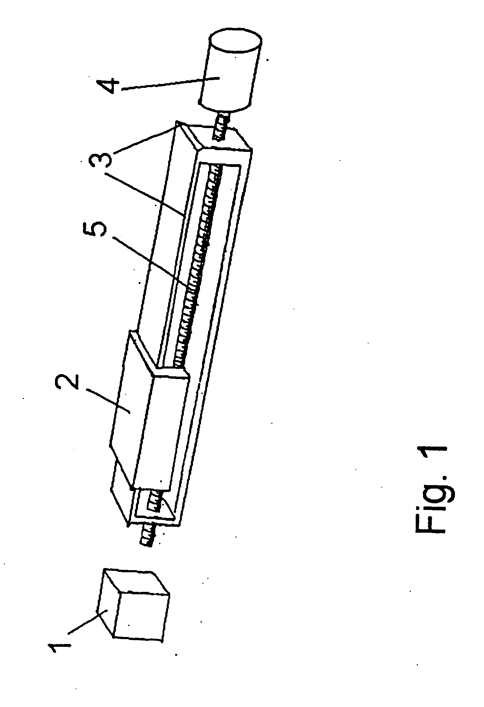

Die Figur 1 zeigt in schematischer Darstellung eine Spindel-Schlittenvorrichtung mit einer Schmiervorrichtung 1. Der in Führungen 3 verschiebbare, mit einer Spindel 5 verbundene Schlitten 2 ist mittels des Antriebs 4 in Längsrichtung verschiebbar. Hinter der Spindel-Schlittenvorrichtung ist schematisch eine Schmiervorrichtung 1 angeordnet, die mittels des Antriebes 4 Schmierimpulse auslöst. Die Schmiervorrichtung kann hydraulisch, pneumatisch, direkt oder indirekt mechanisch, elektromagnetisch oder in ähnlicher Weise ausgebildet sein. Im Folgenden ist eine indirekt mechanische sägezahnförmige Ausführungsform als Beispiel beschrieben.

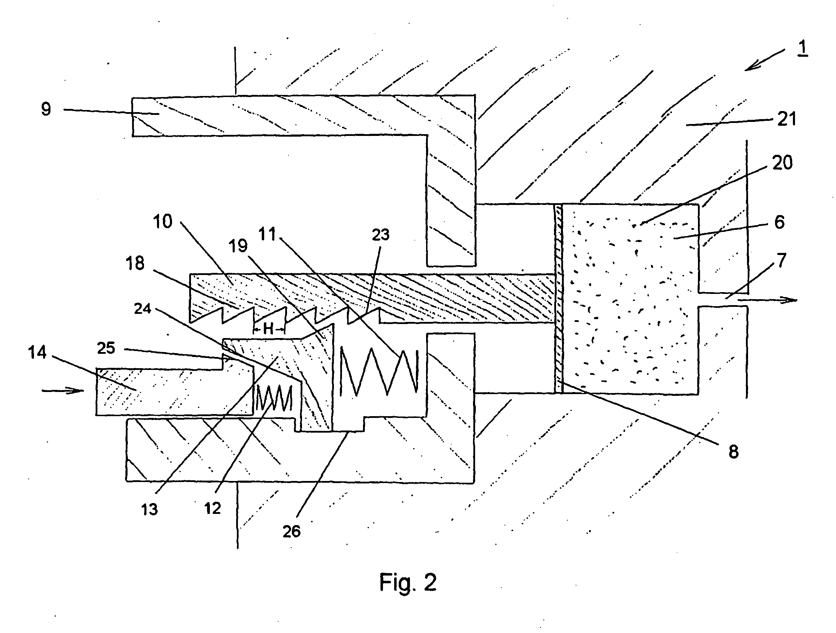

Der beispielhafte Mechanismus zur Auslösung der Schmierimpulse ist in Figur 2 gezeigt. Die Schmiervorrichtung 1 weist ein Gehäuse 9 auf, welches in einem weiteren Gehäuse 21 angeordnet ist. Das Schmiermittel 20 ist in einem Reservoir 6 gelagert. Im Reservoir 6 befindet sich ein Kolben 8, der bei Betätigung das Schmiermittel in Richtung eines Ausgangs 7 befördert. Der Ausgang 7 ist beispielsweise mit einem nicht dargestellten Verteiler verbunden, der das Schmiermittel 20 an die einzelnen Schmierstellen über ebenfalls nicht dargestellten Leitungen fördert. Der Kolben 8 ist mit einer Kolbenstange 10 verbunden. Die Kolbenstange 10 weist einen sägezahnförmigen Bereich 18 mit mehreren Zähnen 23 auf. In die Zähne 23 des sägezahnförmigen Bereichs 18 greift ein Betätigungsteil 13 ein. An dem Betätigungsteil 13 ist ein Vorsprung 19 angebracht, der der Form der Zähne 23 des sägezahnförmigen Bereichs 18 entspricht. Das Betätigungsteil 13 ist an der inneren unteren Fläche 26 des Gehäuses 9 verschiebbar gelagert. Das Betätigungsteil 13 wird mittels eines Schubteiles 14 - geführt über die Schrägfläche 24 des Betätigungsteils 13 und die Schrägfläche 25 des Schubteiles 14 - nach oben und nach vorne geschoben, wobei der Vorsprung 19 des Betätigungsteiles 13 in einen Zahn 23 der Kolbenstange 10 eingreift und diese den Kolben 8 nach vorne zur Ausführung eines Schmierimpulses schiebt. Zwischen dem Gehäuse 9 und dem Betätigungsteil 13 und zwischen dem Betätigungsteil 13 und dem Schubteil 14 befindet sich jeweils eine Feder 11 und 12 zur Rückwärtsbewegung des Betätigungsteiles13 und des Schubteiles 14 nach Ausführung eines Hubes. Die Hublänge H des Kolbens 8 entspricht einer Zahnlänge eines Zahnes 23.

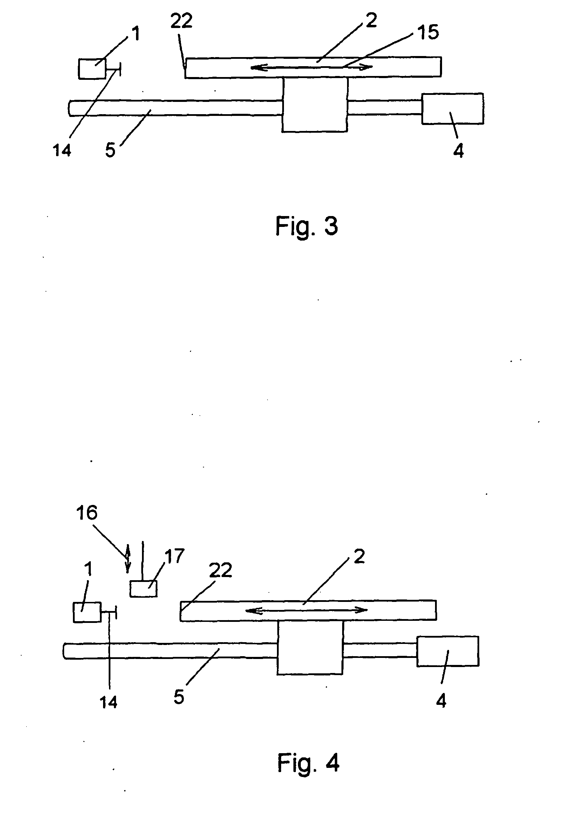

In den Figuren 3 und 4 sind vereinfacht zwei Beispiele für den Auslösemechanismus eines Schmierimpulses gezeigt. In beiden Figuren 3 und 4 ist der Schlitten 2 zu sehen. Der Schlitten 2 ist mit der Spindel 5 verbunden, die durch den Antrieb 4 den Schlitten gemäss Doppelpfeil 15 in Vor- oder Rückwärtsbewegung versetzt.

In Figur 3 wird ein Schmierimpuls durch Berührung der Stirnfläche 22 des Schlittens 2 mit dem Schubteil 14 der Schmiervorrichtung 1 ausgelöst.

In Figur 4 ist ein Schieber 17 vorgesehen, der zwischen die Schmiervorrichtung 1 und die Stirnfläche 22 des Schlittens 2 gemäss Doppelpfeil 16 verfahrbar ist. Der Schieber 17 kann einerseits durch Bewegung in Richtung des Schubteils 14 oder durch Berührung der Stirnfläche 22 des Schlittens 2 den Schmierimpuls auslösen.

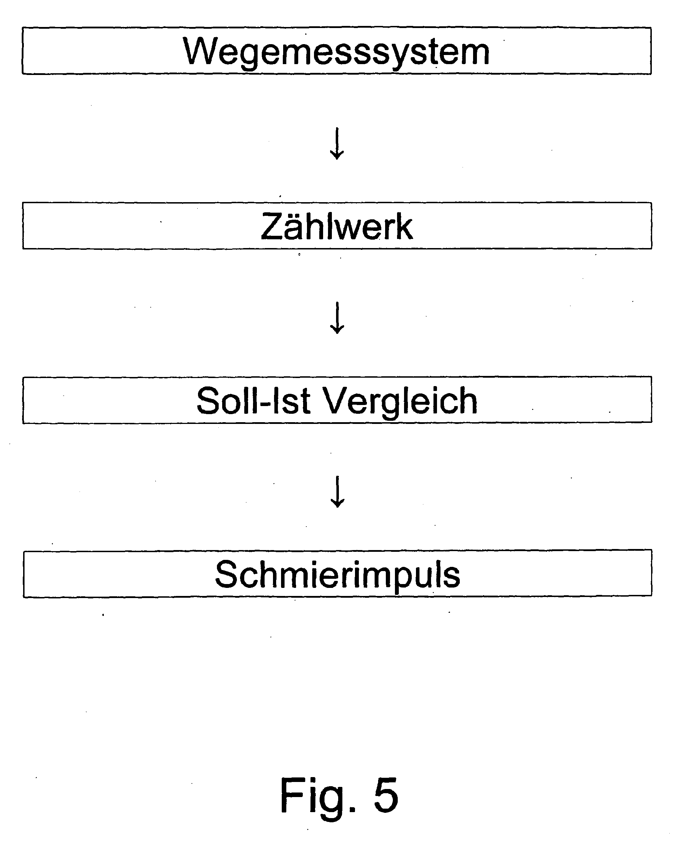

Das Blockschaltbild in Figur 5 beschreibt den Ablauf zur Erzeugung eines Schmierimpulses. Der Zeitpunkt zur Auslösung eines Schmierimpulses erfolgt nach einer bestimmten Arbeitsdauer der zu schmierenden Teile. Die Zeitdauer ergibt sich beispielsweise durch Messung der einzelnen zurückgelegten Wegstrecken des Schlittens 2 mittels eines Wegemesssystems. Die Wegstrecken werden über ein Zählwerk erfasst. Die tatsächliche Anzahl der Wegstrecken werden mit einer im System gewählten Gesamtanzahl verglichen. Sobald in einem Soll - Ist Vergleich die Gesamtzahl erreicht ist, wird ein Schmierimpuls ausgelöst und der Zähler wieder auf Null gestellt. Der Zyklus beginnt von neuem. Die Kriterien für einen Schmierimpuls können nach folgenden Kriterien je nach Anwendung einzeln oder kombiniert durchgeführt werden.

Die Schmierung erfolgt beispielsweise
- nach einer bestimmten Zahl beispielsweise von Hüben des Schlittens 2. Dabei spielt weder die Länge noch die Richtung der Hübe eine Rolle. Ein Hub ist definiert als eine Bewegung aus dem Stillstand des Schlittens 2;
- nach einem bestimmten festzulegenden Gesamtweg;
- nach einer bestimmten festgelegten Arbeitszeit der Werkzeugvorrichtung.

Die Erfindung ist anwendbar auf alle denkbaren Werkzeugmaschinen im Mehrachsenbetrieb, wie beispielsweise Fräsmaschinen, Elektroerosionsmaschinen, Drehbänke, Schleifmaschinen etc.

### Bezugszeichenliste

- 1: Schmiervorrichtung
- 2: Schlitten
- 3: Führungen
- 4: Antrieb
- 5: Spindel
- 6: Reservoir
- 7: Ausgang
- 8: Kolben
- 9: Gehäuse
- 10: Kolbenstange
- 11: Feder
- 12: Feder
- 13: Betätigungsteil
- 14: Schubteil
- 15: Doppelpfeil
- 16: Doppelpfeil
- 17: Schieber
- 18: Sägezahnförmiger Bereich
- 19: Vorsprung
- 20: Schmiermittel
- 21: Gehäuse
- 22: Schlittenstirnfläche
- 23: Zahn
- 24: Schrägfläche
- 25: Schrägfläche
- 26: Fläche

- H: Hub, Zahnlänge

## Patentansprüche

1. Vorrichtung zum Schmieren von aneinander gleitenden und rollenden Teilen einer Werkzeugvorrichtung mit einem Antrieb (4) zum Bewirken des Gleitvorganges, wobei die Schmiervorrichtung (1) ein in einem Gehäuse (21) angeordnetes Reservoir (6) für das Schmiermittel (20) aufweist, das Reservoir (6) einen Kolben (8) mit einer Kolbenstange (10) zur Beförderung des Schmiermittels (20) in einen Verteiler aufweist, **dadurch gekennzeichnet, dass** die Kolbenstange (10) einen sägezahnförmigen Bereich (18) aufweist und die Kolbenstange (10) durch ein in den sägezahnförmigen Bereich (18) eingreifendes Betätigungsteil (13) betätigbar ist, wobei das Betätigungsteil (13) einen für den sägezahnförmigen Bereich (18) geeignet geformten Vorsprung (19) aufweist und das Betätigungsteil (13) mittels eines Schubteiles (14) beaufschlagbar ist, wobei zwischen dem Betätigungsteil (13) und dem Schubteil (14) und zwischen einem Gehäuse (9) und dem Betätigungsteil (13) jeweils eine Feder (11, 12) angeordnet ist.

2. Vorrichtung nach Anspruch 1, **dadurch gekennzeichnet, dass** die einzelnen Schmierhübe durch eine separate Spindelbewegung durch Berührung einer Schlittenstirnfläche (22) auf das Schubteil (14) auslösbar ist.

3. Vorrichtung nach den Ansprüchen 1 oder 2, **dadurch gekennzeichnet, dass** das Reservoir (6) mindestens einen Ausgang (7) für das Schmiermittel aufweist, wobei an den Ausgang (7) ein Verteiler mit Leitungen zu den Schmierstellen vorgesehen sind.

4. Vorrichtung nach einem der vorherigen Ansprüche 1, 2 und 3, **dadurch gekennzeichnet, dass** die Schmiervorrichtung direkt mechanisch, indirekt mechanisch, hydraulisch, pneumatisch oder elektromagnetisch beaufschlagbar ist.

5. Vorrichtung nach einem der vorherigen Ansprüche, **dadurch gekennzeichnet, dass** die Hublänge H eines Schmierhubes einer Zahnlänge des sägezahnförmigen Bereichs (18) der Kolbenstange (10) entspricht.

6. Verfahren zum Schmieren von aneinander gleitenden Teilen einer Werkzeugvorrichtung mit einem Antrieb (4) zum Bewirken des Gleitvorganges oder Rollvorgangs unter Verwendung einer Vorrichtung nach einem der vorherigen Vorrichtungsansprüchen, **dadurch gekennzeichnet, dass** ein Schmierimpuls durch folgende Verfahrensschritte ausgelöst wird:
• messen des in der Arbeitsphase der gleitenden Teile zurückgelegten Weges,
• erfassen der einzelnen Wegstrecken mittels eines Zählwerkes,
• vergleichen der gesamten Ist-Wegstrecke mit einer gesamten Wegstrecke, nach der ein Schmierimpuls ausgelöst werden soll
• auslösen eines Schmierimpulses nach Erreichen der aufsummierten gesamten Wegstrecke durch denselben Antrieb (4) für die gleitenden Teile.

7. Vorrichtung oder Verfahren nach einem der vorherigen Ansprüche, dass die Schmiervorrichtung (1) in Werkzeugmaschinen, insbesondere in Mehrachsenmaschinen angewendet wird.

## Claims

1. Device for the lubrication of parts of a tool fixture which slide and roll one on the other, with a drive (4) for causing the sliding action, the lubricating device (1) having a reservoir (6) for the lubricant (20), which reservoir (6) is arranged in a housing (21) and has a piston (8) with a piston rod (10) for conveying the lubricant (20) into a distributor, **characterized in that** the piston rod (10) has a sawtooth-shaped region (18), and the piston rod (10) is actuable by means of an actuation part (13) engaging into the sawtooth-shaped region (18), the actuation part (13) having a projection (19) suitably shaped for the sawtooth-shaped region (18), and the actuation part (13) being capable of being acted upon by means of a pushing part (14), a spring (11, 12) being arranged in each case between the actuation part (13) and the pushing part (14) and between a housing (9) and the actuation part (13).

2. Device according to Claim 1, **characterized in that** the individual lubricating strokes can be triggered by means of a separate spindle movement as a result of the contact of a slide end face (22) onto the pushing part (14).

3. Device according to either one of Claims 1 and 2, **characterized in that** the reservoir (6) has at least one outlet (7) for the lubricant, a distributor with lines to the lubricating points being provided at the outlet (7).

4. Device according to one of the preceding Claims 1, 2 and 3, **characterized in that** the lubricating device can be acted upon directly mechanically, indirectly mechanically, hydraulically, pneumatically or electromagnetically.

5. Device according to one of the preceding claims, **characterized in that** the stroke length H of a lubricating stroke corresponds to a tooth length of the sawtooth-shaped region (18) of the piston rod (10).

6. Method for the lubrication of parts of a tool fixture which slide one on the other, with a drive (4) for causing the sliding action or rolling action, using a device according to one of the preceding device claims, **characterized in that** a lubricating pulse is triggered by means of the following method steps:
• measurement of the travel covered in the operating phase of the sliding parts,
• detection of the individual travel distances by means of a counter,
• comparison of the overall actual travel distance with an overall travel distance after which a lubricating pulse is to be triggered, and
• triggering of a lubricating pulse after the added-up overall travel distance is reached, by means of the same drive (4) for the sliding parts.

7. Device or method according to one of the preceding claims, **characterized in that** the lubricating device (1) is employed in machine tools, in particular in multi-axis machines.

## Revendications

1. Dispositif de lubrification de parties d'un système d'outillage glissant ou roulant l'une sur l'autre, avec un entraînement (4) pour provoquer l'opération de glissement, dans lequel le dispositif de lubrification (1) présente un réservoir (6) pour le lubrifiant (20) disposé dans un boîtier (21), le réservoir (6) comporte un piston (8) avec une tige de piston (10) pour refouler le lubrifiant (20) dans un distributeur, **caractérisé en ce que** la tige de piston (10) présente une zone en dents de scie (18) et la tige de piston (10) peut être actionnée au moyen d'une pièce d'actionnement (13) s'engageant dans la zone en dents de scie (18), dans lequel la pièce d'actionnement (13) présente une saillie profilée (19) adaptée à la zone en dents de scie (18) et la pièce d'actionnement (13) peut être commandée par une pièce coulissante (14), un ressort (11, 12) étant chaque fois disposé entre la pièce d'actionnement (13) et la pièce coulissante (14) et entre un boîtier (9) et la pièce d'actionnement (13).

2. Dispositif selon la revendication 1, **caractérisé en ce que** les courses de lubrification individuelles peuvent être déclenchées par un mouvement de broche séparé au moyen du contact d'une face intérieure de coulisseau (22) sur la pièce coulissante (14).

3. Dispositif selon l'une quelconque des revendications 1 ou 2, **caractérisé en ce que** le réservoir (6) présente au moins une sortie (7) pour le lubrifiant, dans lequel il est prévu à la sortie (7) un distributeur avec des conduites vers les points de lubrification.

4. Dispositif selon l'une quelconque des revendications 1, 2 et 3, **caractérisé en ce que** le système de lubrification peut être commandé de façon mécanique directe, de façon mécanique indirecte, de façon hydraulique, de façon pneumatique ou de façon électromagnétique.

5. Dispositif selon l'une quelconque des revendications précédentes, **caractérisé en ce que** la longueur H d'une course de lubrification correspond à une longueur de dent de la zone en dents de scie (18) de la tige de piston (10).

6. Procédé de lubrification de parties d'un système d'outillage glissant l'une sur l'autre, avec un entraînement (4) pour provoquer l'opération de glissement ou l'opération de roulement, en utilisant un dispositif selon l'une quelconque des revendications de dispositif précédentes, **caractérisé en ce que** l'on déclenche une impulsion de lubrification par les étapes suivantes:
• mesure du chemin parcouru par les parties glissantes dans la phase de travail;
• détection des trajets individuels au moyen d'un compteur;
• comparaison du trajet réel total avec un trajet total, après lequel une impulsion de lubrification doit être déclenchée;
• déclenchement d'une impulsion de lubrification après avoir atteint le trajet total cumulé par le même entraînement (4) pour les parties glissantes.

7. Dispositif ou procédé selon l'une quelconque des revendications précédentes, **caractérisé en ce que** le dispositif de lubrification (1) est utilisé dans des machines-outils, en particulier dans des machines à plusieurs axes.
